# EUROPÄISCHE PATENTSCHRIFT

(11) **EP 3 270 011 B1**
(45) Veröffentlichungstag und Bekanntmachung des Hinweises auf die Patenterteilung: **02.09.2020**
(21) Anmeldenummer: 17174876.7
(22) Anmeldetag: 08.06.2017
(51) Int. Cl.: F16H 63/30, F16H 48/24, F16H 48/32, B60K 17/35, B60K 23/08, B60K 20/02

(54) **SCHALTMODUL, DIFFERENTIALSPERRE, GANGSCHALTUNG UND ACHSZUSCHALTUNG**
SWITCH MODULE, DIFFERENTIAL LOCK, GEAR CHANGING DEVICE AND AXLE CONNECTION
MODULE DE COMMUTATION, BLOCAGE DE DIFFÉRENTIEL, CHANGEMENT DE VITESSE ET ACCOUPLEMENT D'UN ESSIEU

(30) Priorität: 13.07.2016 DE 102016212807
(43) Veröffentlichungstag der Anmeldung: 17.01.2018
(73) Patentinhaber: ZF Friedrichshafen AG, 88046 Friedrichshafen (DE)
(72) Erfinder: Brilka, Tobias, 94034 Passau (DE); Grundmüller, Sebastian, 94104 Tittling (DE)
(74) Vertreter: ZF Friedrichshafen AG

(56) Entgegenhaltungen:
- EP-A2- 2 546 086
- DE-A1-102007 002 539
- US-A1- 2012 216 641
- US-A1- 2014 076 086
- US-B1- 6 202 812
- DATABASE WPI Week 198036 Thomson Scientific, London, GB; AN 1980-H7293C XP002776092, -& SU 709 414 A (ONEGA TRACTOR WORKS) 15. Januar 1980 (1980-01-15)

## Beschreibung

Die Erfindung betrifft die Verwendung eines Schaltmoduls für eine Differentialsperre, für eine Gangschaltung oder für eine Achszuschaltung.

Im Stand der Technik sind sowohl Längssperren als auch Quersperren bekannt, welche insbesondere auch in den Antriebssträngen von Kraftfahrzeugen Verwendung finden. Diese Längssperren bzw. Quersperren ermöglichen durch ein Blockieren einer Verteilerfunktion der entsprechenden Differentialgetriebe eine gleichmäßige Verteilung des Antriebsmoments auf die angetriebenen Achsen bzw. die angetriebenen Fahrzeugräder, was insbesondere in unwegsamem Gelände eine Fortbewegung erleichtern kann. Weiterhin sind im Stand der Technik die unterschiedlichsten Ausbildungsformen von Schaltgetriebe bekannt, wobei derartige Schaltgetriebe in der Regel eine Vielzahl unterschiedlicher Gangstufen aufweisen. Jede dieser Gangstufen definiert ein bestimmtes Übersetzungsverhältnis von Getriebeeingangsdrehzahl zu Getriebeausgangsdrehzahl. Somit kann je nach gewünschter Fahrtgeschwindigkeit des Fahrzeugs die passende Gangstufe gewählt werden. Das Einrücken bzw. Ausrücken dieser Längssperren bzw. Quersperren ebenso wie das Schalten der Gangstufen erfolgt dabei stets über hierfür geeignete Aktuatoren, welche üblicherweise mittels einer Schaltgabel die Längssperre bzw. die Quersperren oder die Gangstufe betätigen.

In diesem Zusammenhang beschreibt EP 0 510 457 B1 eine formschlüssige Kupplung für ein Verteilergetriebe eines Kraftfahrzeugs und ein Verfahren zu deren Betätigung. Die als Klauenkupplung ausgebildete Kupplungsanordnung besteht einerseits aus einem treibenden Kupplungsteil, welcher mit dem Antriebsstrang und einem Radantriebsstrang in Verbindung steht, und andererseits aus einem getriebenen Kupplungsteil, welcher mit einem zu aktivierenden Radantriebsstrang verbunden ist und als Schiebemuffe ausgebildet ist, um über ein Einrückglied mittels einer Schaltgabel bewegt zu werden. Das Einrückglied umfasst einen Kolben mit einer Kolbenstange und einen Fluidzylinder. Am vorderen Ende der Kolbenstange ist die Schaltgabel befestigt. Der Kolben wird auf einer Seite mit Fluid beaufschlagt während sich auf einer anderen Seite eine Druckfeder abstützt. In der Ruhestellung wird die Schaltgabel durch die Druckfeder in eine erste Richtung gedrückt und bringt die Kupplung in einen ausgerückten Zustand. Der eingerückte Zustand der Kupplung wird dadurch erreicht, dass durch eine entsprechende Druckbeaufschlagung die Kolbenstange in eine zweite Richtung bewegt wird, bis die Kupplungsteile formschlüssig miteinander verbunden sind.

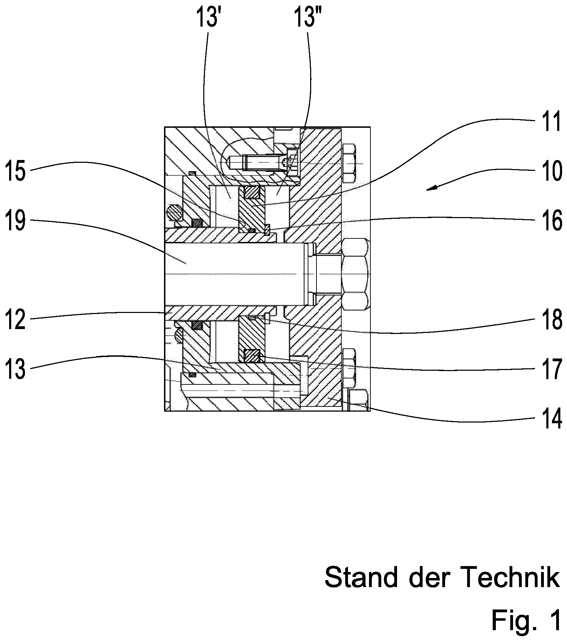

Die Fig. 1 zeigt weiterhin ein der Anmelderin bekanntes Kolben-Hülsen-Bauteil eines einfachwirkenden fluidbetätigbaren Aktuators. Der Aktuator umfasst u.a. ein als Schraubenfeder ausgebildetes Rückstellelement und eine mit Fluiddruck beaufschlagbare Arbeitskammer eines Arbeitszylinders. Der Kolben ist an einem Ende der Hülse angeordnet, wobei er auf einer Seite formschlüssig durch eine radiale Umfangszunahme der Hülse abgestützt wird und auf der anderen Seite durch einen Sicherungsring abgestützt wird.

EP 2 546 086 A offenbart ein doppelwirkendes Zylinder-Kolben-Aggregat für die Gangschaltung in einem Verteilergetriebe.

Die bekannten Schaltmodule sind jedoch insofern nachteilbehaftet, als dass es insbesondere bei auftretenden Differenzdrehzahlen während der Fahrt regelmäßig zu Teileinrückungen oder zu Kopf-auf-Kopf-Treffern der Schaltklauen mit den Schaltmuffen kommt. Dies führt mitunter zu starken Beschleunigungen der betreffenden Schaltungsteile, wie z.B. Schaltmuffe, Schaltgabel, Schalthülse, Zylinder, Deckel und Kolben, entgegen der Zuschaltrichtung. Aus diesen Beschleunigungen der Schaltungsteile resultieren wiederum vergleichsweise harte Schläge auf die Schaltungsteile, welche dadurch Schaden nehmen können, was in Folge zu einem Funktionsverlust der Schaltmodule führen kann.

Es ist eine Aufgabe der vorliegenden Erfindung, ein verbessertes Schaltmodul für eine Differentialsperre oder für eine Gangschaltung vorzuschlagen.

Diese Aufgabe wird erfindungsgemäß durch die Verwendung eines Schaltmoduls gemäß Anspruch 1 gelöst. Vorteilhafte Ausgestaltungen und Weiterbildungen der Erfindung gehen aus den abhängigen Ansprüchen hervor.

Die Erfindung betrifft die Verwendung eines Schaltmoduls für eine Differentialsperre, für eine Gangschaltung oder für eine Achszuschaltung, umfassend ein elastisches Rückstellelement und ein Zylinder-Kolben-Aggregat, wobei das Rückstellelement das Zylinder-Kolben-Aggregat mit einer Rückstellkraft beaufschlagt. Das erfindungsgemäße Schaltmodul zeichnet sich dadurch aus, dass das Zylinder-Kolben-Aggregat als doppelwirkendes Zylinder-Kolben-Aggregat ausgebildet ist. Durch die Doppelwirkung des Zylinder-Kolben-Aggregats ergibt sich zunächst der Vorteil, dass die oben beschriebenen Beschleunigungen der Schaltungsteile und das daraus resultierende Anschlagen der Schaltungsteile gedämpft werden können, indem eine Kammer des Zylinder-Kolben-Aggregats mit einem Dämpfdruck befüllt wird, welcher entsprechend auf einen Kolben des Zylinder-Kolben-Aggregats wirkt und diesen entgegen den Beschleunigungen der Schaltungsteile vorspannt. Ein weiterer Vorteil ist darin zu sehen, dass ein Einrückvorgang des Schaltmoduls bzw. des Zylinder-Kolben-Aggregats durch die Beaufschlagung mit dem Dämpfdruck unterstützt werden kann. Der eigentliche Einrückvorgang erfolgt dabei zwar primär durch die Rückstellkraft des Rückstellelements, wird aber durch die Wirkung des Dämpfdrucks auf den Kolben unterstützt.

Der Kolben teilt bevorzugt einen Zylinder des Zylinder-Kolben-Aggregats in einen Ausrückraum und einen Dämpfraum, wobei der Ausrückraum den Ausrückdruck aufnimmt und der Dämpfraum den Dämpfdruck aufnimmt.

Bevorzugt umfasst das Zylinder-Kolben-Aggregat einen beidseitig mit Druck beaufschlagbaren Kolben, der bei einer Beaufschlagung mit dem Dämpfdruck die Rückstellkraft des Rückstellelement verstärkt und bei einer Beaufschlagung mit dem Ausrückdruck eine dem Schaltmodul zugeordnete Schaltgabel entgegen der Rückstellkraft des Rückstellelements mit Kraft beaufschlagt. Bei einer Betätigung, also einem Einrücken, des erfindungsgemäßen Schaltmoduls wird die dem Schaltmodul zugeordnete Schaltgabel durch die Rückstellkraft des Rückstellelements axial verschoben. Dieses Verschieben kann, wie beschrieben, vorteilhaft durch eine Beaufschlagung mit dem Dämpfdruck verstärkt werden, was jedoch in der Regel zur Betätigung des Schaltmoduls nicht notwendig ist. Vielmehr dient der Dämpfdruck in erster Linie zum Dämpfen von harten Stößen und damit zur Vermeidung von Beschädigungen der Schaltungsteile. Das Betätigen bzw. Einrücken des Schaltmoduls erfolgt bevorzugt ausschließlich über die Rückstellkraft des Rückstellelements. Die Rückstellkraft rückt eine dem Schaltmodul zugeordnete Schaltgabel ein, der Ausrückdruck hingegen rückt die Schaltgabel wieder aus.

Durch die Betätigung des Schaltmoduls wird bevorzugt eine dem Schaltmodul zugeordnete Schaltgabel eingerückt. Bei einer Beaufschlagung mit dem Ausrückdruck, welcher der Rückstellkraft des Rückstellelements sowie der Beaufschlagung mit dem Dämpfdruck entgegengerichtet ist, wird die Schaltgabel wieder ausgerückt.

Das erfindungsgemäße Schaltmodul eignet sich gleichermaßen zum Schalten einer Differentialsperre wie auch zum Schalten einer Gangschaltung eines Kraftfahrzeugs oder zum Betätigen einer Achszuschaltung eines Fahrzeuggetriebes.

Das Zylinder-Kolben-Aggregat besteht vorzugsweise aus Metall, insbesondere aus Stahl. Dies gewährleistet eine vergleichsweise große Robustheit und damit Langlebigkeit des Zylinder-Kolben-Aggregats auch unter regelmäßigen und hohen Belastungen.

Gemäß einer bevorzugten Ausführungsform der Erfindung ist es vorgesehen, dass das Schaltmodul weiterhin eine Schaltstange umfasst, wobei auf der Schaltstange ein Anschlagring angeordnet ist, an welchem sich das Rückstellelement abstützt und wobei das Zylinder-Kolben-Aggregat über den Kolben axialfest mit der Schaltstange verbunden ist. Somit kann die Schaltstange bei einer Druckbeaufschlagung des Kolbens und einer daraus resultierenden Verschiebung des Kolbens der Bewegung des Kolbens folgen. Andererseits folgt der Kolben einer Bewegung der Schaltstange, welche durch die Rückstellkraft des Rückstellelements und entgegen einem Ausrückdruck verursacht wird. In dieser Ausführungsform ist die dem Schaltmodul zugeordnete Schaltgabel bevorzugt axialfest mit der Schaltstange verbunden. Somit kann über den Kolben die Schaltgabel eingerückt und ausgerückt werden. Zusätzlich kann der Kolben, bei entsprechender Beaufschlagung mit dem Dämpfdruck, Beschleunigungen und Stöße der Schaltgabel entgegen der Einrückrichtung dämpfen.

Gemäß einer alternativ bevorzugten Ausführungsform der Erfindung ist es vorgesehen, dass das Schaltmodul weiterhin eine Schaltstange umfasst, wobei auf der Schaltstange eine Schaltgabel angeordnet ist, an welcher sich das Rückstellelement abstützt und wobei das Zylinder-Kolben-Aggregat über den Kolben axialfest mit der Schaltstange verbunden ist, wobei die Schaltgabel axialfest mit der Schaltstange verbunden ist. Auch in dieser alternativ bevorzugten Ausführungsform kann die Schaltstange bei einer Druckbeaufschlagung des Kolbens und einer daraus resultierenden Verschiebung des Kolbens der Bewegung des Kolbens folgen. Umgekehrt folgt der Kolben einer Bewegung der Schaltstange, welche durch die Rückstellkraft des Rückstellelements und entgegen einem Ausrückdruck verursacht wird. Durch die axialfeste Verbindung der Schaltstange mit der Schaltgabel wird jede Beaufschlagung des Kolbens mit Kraft bzw. Druck auch an die Schaltgabel weitergegeben und umgekehrt. Somit können auch in diesem Fall Beschleunigungen und Stöße der Schaltgabel entgegen der Einrückrichtung durch den Dämpfdruck gedämpft werden.

Bevorzugt ist es vorgesehen, dass die Schaltgabel mittels lösbaren Verbindungselementen, insbesondere Schrauben, axialfest auf der Schaltstange angeordnet ist.

Gemäß einer weiteren alternativ bevorzugten Ausführungsform der Erfindung ist es vorgesehen, dass ein Kolben des Zylinder-Kolben-Aggregats als Ringkolben ausgebildet ist und dass das Rückstellelement in einer Kammer angeordnet ist. Dies erlaubt eine besonders raumsparende Ausbildungsweise des erfindungsgemäßen Schaltmoduls, da auf zusätzliche Elemente, wie z.B. die Schaltstange und ggf. eine auf der Schaltstange verschieblich angeordnete Hülse, verzichtet werden kann.

Bevorzugt ist es vorgesehen, dass Außenwände der Kammern des Zylinder-Kolben-Aggregats durch ein Getriebegehäuse gebildet werden. Somit entfällt vorteilhaft auch das Vorsehen eines gesonderten Zylinder-Elements, da der Zylinder stattdessen durch das Getriebegehäuse gebildet wird.

Gemäß einer besonders bevorzugten Ausführungsform der Erfindung ist es vorgesehen, dass der Ringkolben an seinem radialen Innenumfang einen Mitnehmer aufweist, welcher dazu ausgebildet ist, in eine Nut einer Schaltmuffe einzugreifen. Daraus ergibt sich der Vorteil, dass der Kolben funktional die Aufgabe einer Schaltgabel übernimmt, wodurch auch auf das Vorhandensein einer Schaltgabel vorteilhat verzichtet werden kann. Somit wird eine nochmals kompaktere und leichtgewichtigere Ausbildungsweise des erfindungsgemäßen Schaltmoduls ermöglicht.

Gemäß einer weiteren alternativ bevorzugten Ausführungsform der Erfindung ist es vorgesehen, dass das Zylinder-Kolben-Aggregat einen ersten Zylinder mit einem darin angeordneten ersten Kolben und einen zweiten Zylinder mit einem darin angeordneten zweiten Kolben umfasst und dass das Zylinder-Kolben-Aggregat mittels des Zylinderdeckels axialfest mit der Schaltstange verbunden ist. Dies stellt eine einfache und vergleichsweise kostengünstige Möglichkeit dar, ein aus dem Stand der Technik bekanntes Schaltmodul mit einem einfachwirkenden Zylinder-Kolben-Aggregat zu einem erfindungsgemäßen Schaltmodul mit einem doppelwirkenden Zylinder-Kolben-Aggregat aufzuwerten. Die axialfeste Verbindung des Zylinderdeckels mit der Schaltstange führt dazu, dass der erste bzw. der zweite Kolben und die Hülse relativ zur Schaltstange und dem Zylinderdeckel axial verschoben werden können.

Um die Schaltvorgänge zu beschleunigen, weisen bevorzugt der Ausrückraum bzw. der Dämpfraum jeweils ein Schnellentlüftungsventil auf, so dass eine Beaufschlagung mit dem Ausrückdruck bzw. mit dem Dämpfdruck bei einem Umschalten des Schaltmoduls schnell abgebaut werden kann und der Einrückvorgang bzw. der Ausrückvorgang nicht verzögert wird.

Gemäß einer besonders bevorzugten Ausführungsform der Erfindung ist es vorgesehen, dass der erste Kolben ausschließlich von einer ersten Seite mit einem ersten Druck beaufschlagbar ist und der zweite Kolben ausschließlich von einer zweiten Seite mit einem zweiten Druck beaufschlagbar ist. Eine Druckbeaufschlagung des zweiten Kolbens von der zweiten Seite unterstützt dabei die Rückstellkraft des Rückstellelements und dämpft somit Stöße bzw. Kräfte und Beschleunigungen, welche insbesondere aus auftretenden Differenzdrehzahlen entstehen und auf die Schaltungsteile wirken. Die Druckbeaufschlagung des zweiten Kolbens von der zweiten Seite stellt also die Druckbeaufschlagung mit dem Dämpfdruck dar. Eine Druckbeaufschlagung des erstens Kolbens von der ersten Seite hingegen bewirkt bei ausreichendem Druck das Ausrücken des Schaltmoduls. Die Druckbeaufschlagung des ersten Kolbens von der ersten Seite stellt entsprechend die Druckbeaufschlagung mit dem Ausrückdruck dar.

Gemäß einer weiteren besonders bevorzugten Ausführungsform der Erfindung ist es vorgesehen, dass der erste Kolben und der zweite Kolben über mindestens einen Abstandsstift axial voneinander beabstandet sind, wobei jeder Abstandsstift durch eine dafür vorgesehene Öffnung eines Zylinderdeckels verläuft. Der erste Kolben und der zweite Kolben sind also nicht axialfest miteinander verbunden, sondern im Gegenteil auch gegeneinander verschiebbar, wobei über die Axiallänge des mindestens einen Abstandsstifts ein axialer Mindestabstand vorgegeben ist. Daraus ergibt sich der Vorteil, dass ein an sich bekanntes und vielfach bewährtes Zylinder-Kolben-Aggregat mittels des zweiten Kolbens sowie des zweiten Zylinders zu einem erfindungsgemäßen Zylinder-Kolben-Aggregat mit allen sich daraus ergebenden Vorteilen baulich erweitert werden kann. Indem der mindestens eine Abstandsstift einen festen Mindestabstand des ersten Kolbens zum zweiten Kolben vorgibt, wirken der erste und der zweite Kolben bei einer Druckbeaufschlagung funktional wie ein einziger doppelwirkender Kolben. Bevorzugt werden der erste Kolben und der zweite Kolben dabei räumlich durch den Zylinderdeckel getrennt, welcher den Dämpfraum vom Ausrückraum trennt bzw. den ersten Zylinder vom zweiten Zylinder trennt.

Bevorzugt ist es vorgesehen, dass der erste Kolben und der zweite Kolben über genau drei Abstandsstifte axial voneinander beabstandet sind. Somit stützen sich der erste und der zweite Kolben also über jeweils drei Kontaktpunkte aneinander ab.

Dies trägt dazu bei, bei der Beaufschlagung mit Drücken bzw. Kräften ein Verkippen des einen Kolbens gegen den anderen zu vermeiden.

Gemäß einer weiteren besonders bevorzugten Ausführungsform der Erfindung ist es vorgesehen, dass das Schaltmodul weiterhin eine Hülse umfasst und dass das Zylinder-Kolben-Aggregat derart axialfest mit der Hülse verbunden ist, dass die Hülse auf der Schaltstange axial verschieblich ist, wobei das Rückstellelement sich an der Hülse abstützt. Somit wird bei einer Druckbeaufschlagung des erstens Kolbens und einer daraus resultierenden Axialbewegung des Kolbens auch die Hülse axial auf der Schaltstange verschoben. Sofern das Zylinder-Kolben-Aggregat einen zweiten Kolben umfasst und der erste Kolben und der zweite Kolben bei einer Druckbeaufschlagung über den mindestens einen Abstandsstift axial aneinander anliegen, so führt entsprechend auch eine Druckbeaufschlagung des zweiten Kolbens und eine daraus resultierende Axialverschiebung des zweitens Kolbens zu einer Axialverschiebung der Hülse auf der Schaltstange.

Gemäß einer weiteren besonders bevorzugten Ausführungsform der Erfindung ist es vorgesehen, dass auf der Hülse ein Anschlagring angeordnet ist, an welchem sich das Rückstellelement abstützt.

Gemäß einer weiteren bevorzugten Ausführungsform der Erfindung ist es vorgesehen, dass das Zylinder-Kolben-Aggregat fluidbetätigbar ist. Dies hat sich als besonders vorteilhaft und zuverlässig erwiesen.

Besonders bevorzugt wird Luft, also Atmosphäre, als Fluid für das erfindungsgemäße Zylinder-Kolben-Aggregat herangezogen. Luft ist nicht nur unbegrenzt und überall verfügbar, sondern führt bei dem erfindungsgemäßen Zylinder-Kolben-Aggregat vorteilhaft dazu, dass die bereits beschriebene Dämpfwirkung, welche sich durch die Verwendung des doppelwirkenden Zylinder-Kolben-Aggregats mit einem Dämpfraum ergibt, mit zunehmendem Druck verstärkt, da Luft bei zunehmender Kompression zunehmend mehr Expansionsdruck aufbaut. Diese Zunahme des Expansionsdrucks verhält sich im Wesentlichen linear zur Verringerung des Dämpfvolumens, womit selbst größte Kräfte bzw. Beschleunigungen zuverlässig und vergleichsweise sanft gedämpft werden können.

Gemäß einer weiteren bevorzugten Ausführungsform der Erfindung ist es vorgesehen, dass das Rückstellelement als Schraubenfeder oder als Tellerfeder ausgebildet ist. Schraubenfedern und Tellerfedern sind weit verbreitet und entsprechend kostengünstig in nahezu beliebigen Ausbildungsformen beschaffbar. Durch ihre geometrische Beschaffenheit eignen sie sich zudem vorteilhaft dazu, radial außen um die Hülse herum angeordnet zu werden, was eine raumsparende Ausbildungsform des erfindungsgemäßen Schaltmoduls begünstigt.

Bevorzugt ist die Schraubenfeder bzw. Tellerfeder eine metallische Schraubenfeder. Metallische Schraubenfedern bzw. Tellerfedern sind robust und langlebig.

Besonders bevorzugt ist die Schraubenfeder bzw. Tellerfeder auf Druck vorgespannt. Gemäß einer weiteren bevorzugten Ausführungsform der Erfindung ist es vorgesehen, dass die Schaltstange eine Aussparung aufweist, in welche ein Hebelkopf der Schaltgabel eingreift, wobei die Schaltgabel wippenartig um ein Drehgelenk gelagert ist. Das Anordnen der Schaltgabel mittels ihres Hebelkopfs in der Aussparung der Schaltstange führt zu einer besonders zuverlässigen und robusten axialen Verbindung der Schaltstange mit der Schaltgabel. Der Hebelkopf der Schaltgabel folgt also einer Axialbewegung der Schaltstange unmittelbar. Durch ihre wippenartige Lagerung auf dem Drehgelenk wirkt die Schaltgabel als Hebel. Dies ermöglicht eine wippenartige Betätigung der Schaltgabel unter Ausnutzen einer Hebelwirkung, wodurch ein vergleichsweise größerer Spielraum bei der Gestaltung und Auslegung des Zylinder-Kolben-Aggregats geschaffen wird, da die von diesem erzeugbaren Kräfte mittels der Hebelwirkung herauf- bzw. herabsetzbar sind. Im umgekehrten Maße wird ein Stoß, welchen die Schaltgabel auf das Schaltmodul überträgt, ebenfalls herauf- bzw. herabgesetzt.

Nachfolgend wird die Erfindung anhand von in den Figuren dargestellten Ausführungsformen beispielhaft erläutert.

Es zeigen:
- Fig. 1: schematisch den Aufbau eines bekannten Schaltmoduls,
- Fig. 2: schematisch eine mögliche Ausbildungsform eines erfindungsgemäßen Schaltmoduls,
- Fig. 3: schematisch eine weitere mögliche Ausbildungsform eines erfindungsgemäßen Schaltmoduls,
- Fig. 4: schematisch eine weitere mögliche Ausbildungsform eines erfindungsgemäßen Schaltmoduls und
- Fig. 5: schematisch eine weitere mögliche Ausbildungsform eines erfindungsgemäßen Schaltmoduls.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt schematisch den Aufbau eines bekannten Schalmoduls 10. Das bekannte Schaltmodul 10 besteht aus einem Kolben 11 und einer Hülse 12, welche in einem Zylinder 13 angeordnet sind. Der Zylinder 13 ist durch einen Zylinderdeckel 14 verschlossen. Der Kolben 11 unterteilt den Arbeitszylinder 13 in zwei Kammern 13' und 13", von denen jedoch ausschließlich die Kammer 13' mit Druck beaufschlagbar ist. Wie zu sehen ist, ist der Kolben 11 an einem ersten axialen Ende der Hülse 12 radial umlaufend angeordnet. Um den Sitz des Kolbens 11 auf der Hülse 12 zu gewährleisten, ist er auf einer Seite formschlüssig durch eine radiale Umfangszunahme 15 der Hülse 12 abgestützt und auf der anderen Seite durch einen Sicherungsring 16 abgestützt. Weiterhin weist der Kolben 11 an seinem radialen Außenumfang ein Dichtelement 17 auf und an seinem radialen Innenumfang ein Dichtelement 18. Die Hülse 12 ist axial verschiebbar auf einer Schaltstange 19 angeordnet. Da der Zwischenraum zwischen der Schaltstange 19 und der Hülse 12 nicht druckdicht abdichtbar ist, ohne dabei den Radialumfang der Hülse zu vergrößern, ist die Kammer 13" nicht mit Druck beaufschlagbar. Ein Druck in der Kammer 13" wurde durch den Zwischenraum zwischen der Schaltstange 19 und der Hülse 12 entweichen.

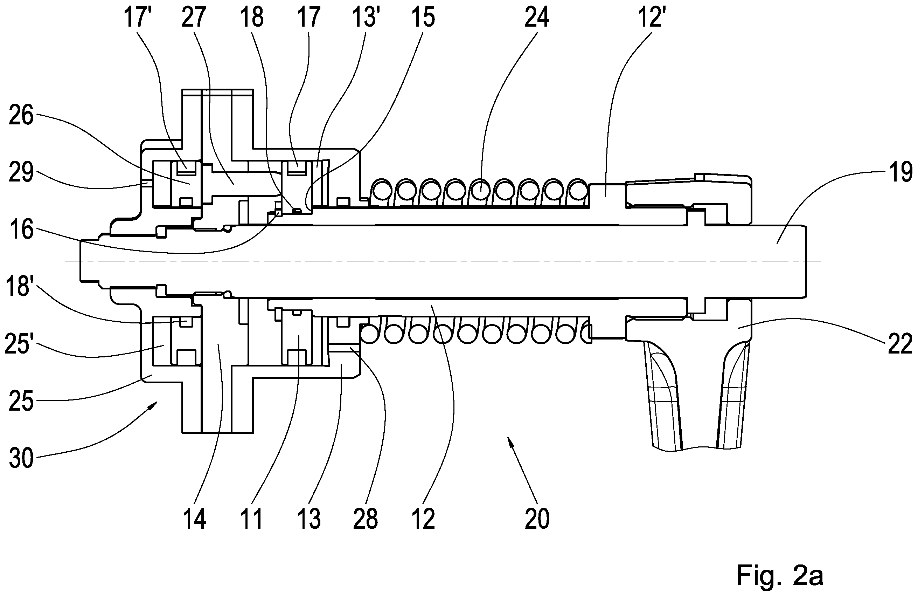

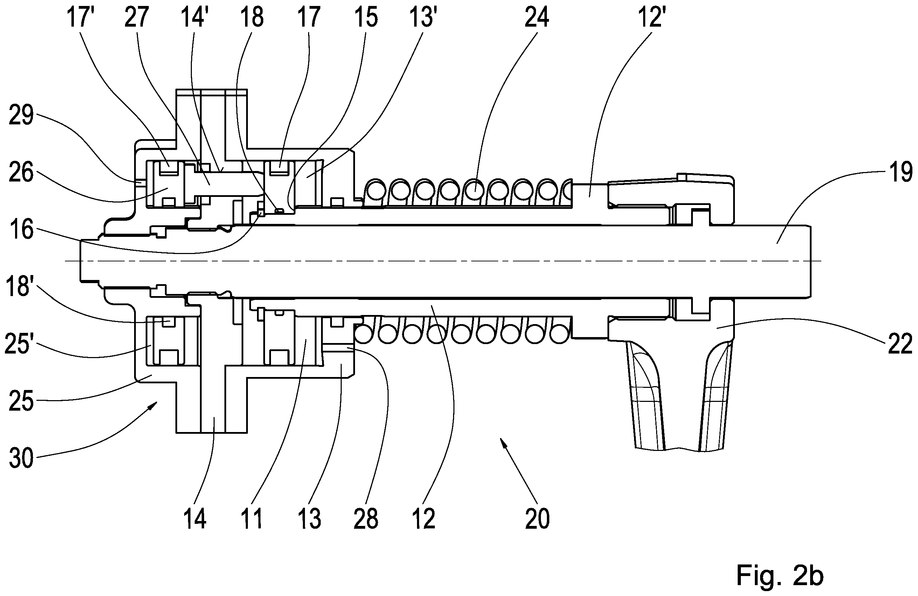

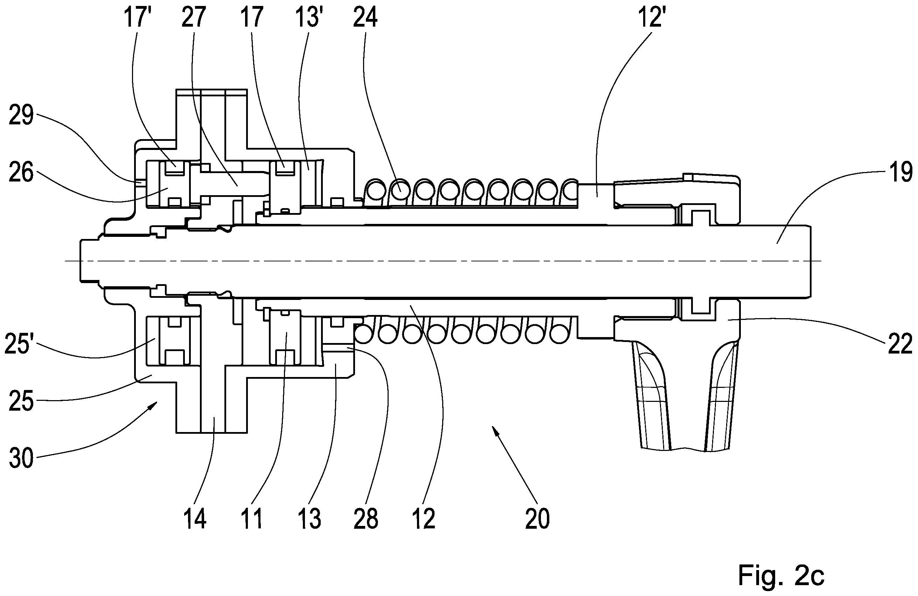

Fig. 2a zeigt schematisch eine mögliche Ausbildungsform eines erfindungsgemäßen Schaltmoduls 20. Das Schaltmodul 20 umfasst einen ersten Zylinder 13, einen mit Fluiddruck beaufschlagbaren Ausrückraum 13', einen Zylinderdeckel 14, einen ersten Kolben 11, einen zweiten Zylinder 25, einen mit Fluiddruck beaufschlagbaren Dämpfraum 25', einen zweiten Kolben 26, eine Schaltstange 19, eine Schaltgabel 22, eine Hülse 12 und ein Rückstellelement 24. Weiterhin weist der erste Kolben 11 an seinem radialen Außenumfang ein Dichtelement 17 auf und an seinem radialen Innenumfang ein Dichtelement 18 auf. In identischer Weise weist auch der zweite Kolben 26 an seinem radialen Außenumfang ein Dichtelement 17' auf und an seinem radialen Innenumfang ein Dichtelement 18'. Der erste Kolben 11 ist beispielsgemäß mittels drei Abstandsstiften 27 (von denen in der Darstellung der Fig. 2 jedoch nur ein einzelner dargestellt ist) vom zweiten Kolben 26 axial beabstandet. Diese axiale Beabstandung stellt lediglich einen durch die axiale Länge der Abstandsstifte 27 vorgegebenen axialen Mindestabstand dar. Eine axiale Verschiebung eines der beiden Kolben 11 bzw. 26 in Richtung des jeweils anderen Kolben 11 bzw. 26 führt somit über die Abstandsstifte 27 zu einer identischen Verschiebung des jeweils anderen Kolbens 11 bzw. 26. Die Abstandsstifte 27 sind durch hierfür vorgesehene Öffnungen 14' im Zylinderdeckel 14 geführt, welche die Abstandsstifte 27 radial stützen. Der erste Zylinder 13, der erste Kolben 11, der Zylinderdeckel 14, der zweite Zylinder 25, der zweite Kolben 26 und die Abstandsstifte 27 bilden ein doppelwirkendes Zylinder-Kolben-Aggregat 30. Um den Sitz des ersten Kolbens 11 auf der Hülse 12 zu gewährleisten, ist er auf einer Seite formschlüssig durch eine radiale Umfangszunahme 15 der Hülse 12 abgestützt und auf der anderen Seite durch einen Sicherungsring 16 abgestützt. An einem anderen Ende der Hülse 12 ist diese über einen Schraubengewindeabschnitt mit der Schaltgabel 22 verbunden. Weiterhin weist die Hülse 12 einen Anschlagring 12' auf, an welchem sich das Rückstellelement 24 mit einem ersten axialen Ende abstützt. Beispielsgemäß ist das Rückstellelement 24 als elastische Schraubenfeder 24 aus Federstahl hergestellt. Mit einem zweiten axialen Ende stützt sich das Rückstellelement 24 am ersten Zylinder 13 ab. Das Rückstellelement 24 ist dabei derart ausgebildet, dass es während einer Montage des gezeigten Schaltmoduls 20 derart zwischen dem Anschlagring 12' und dem ersten Zylinder 13 angeordnet wird, dass es im Ruhezustand auf Spannung belastet wird. Dies führt dazu, dass im Ruhezustand des Schaltmoduls 20, bei dem weder der Ausrückraum 13' noch der Dämpfraum 25' mit Fluiddruck beaufschlagt sind, der zweite Kolben 26 am Zylinderdeckel 14 anliegt. In diesem Zustand ist das Schaltmodul 20 im eingerückten Zustand, d.h. eine entsprechende Gangstufe ist geschaltet bzw. eine Differentialsperre ist eingelegt. Bei einer entsprechenden Beaufschlagung des Ausrückraums 13' mit Fluiddruck, nämlich mit dem Ausrückdruck, wird das Schaltmodul 20 aus dem eingerückten Zustand, also dem Ruhezustand, in den ausgerückten Zustand geschaltet. Um nun die bei hohen Differenzdrehzahlen durch das Auftreten von Teileinrückungen oder Kopf-auf-Kopf-Treffern unterschiedlicher Schaltungsteilen auftretenden Kräfte und Beschleunigungen, welche entgegen der Schaltrichtung des ersten Kolbens 11 wirken und damit einhergehende Beschädigungen des Schaltmoduls 20 zu vermeiden, kann die Rückstellkraft des Rückstellelements 24 verstärkt werden, indem der Dämpfraum 25' durch die Öffnung 29 mit Fluiddruck befüllt wird (Fig. 2b). Die hieraus resultierende Kraft auf den zweiten Kolben 26 wirkt in die gleiche Richtung wie die Rückstellkraft des Rückstellelements 24.

Fig. 2c zeigt das Schaltmodul 20 bei einer Stoßdämpfung durch eine Kompression des Fluids in der Dämpfkammer 25'. Beispielsgemäß hat die Schaltgabel 22 durch einen Stoß, ausgehend von einer Abweisung durch die Zahngeometrie der Schaltklauenpartner bei Differenzdrehzahlen oder durch einen Zahn-auf-Zahn-Treffer zwischen Schaltklauenteilen, eine Beschleunigung nach links (in der Darstellung der Fig. 2) erfahren. Diese Beschleunigung überträgt sie als Kraft bzw. als Impuls, auf die Hülse 12 und auf den ersten Kolben 11, welcher den Stoß mittels der Abstandsstifte 27 wiederum auf den zweiten Kolben 26 überträgt. Dieser Stoß wird dabei einerseits durch das Rückstellelement 24 gedämpft, welches alleine jedoch nicht genug Rückstellkraft aufwenden kann, um den Stoß ausreichend zu dämpfen, um Beschädigungen zu vermeiden. Daher wird im erfindungsgemäßen Schaltmodul 20 auch die aus dem Stoß resultierende Bewegung des zweiten Kolbens 26 gedämpft, indem das Fluid, also die Luft, in der Dämpfkammer 25' komprimiert wird. Wie in der Fig. 2c zu sehen ist, ist die Luft im Dämpfraum gegenüber der Fig. 2a komprimiert. Durch den hierbei entstehenden Expansionsdruck der Luft wird der Stoß mit zunehmender Verschiebung des zweiten Kolbens 26 nach links zunehmend stärker gedämpft, ohne dabei ein hartes Anschlagen zu verursachen. Dieser Expansionsdruck bzw. die daraus auf den zweiten Kolben 26 resultierende Kraft verstärken die Rückstellkraft des Rückstellelements 24. Eine Beschädigung des Schaltmoduls 20 kann somit selbst bei harten Stößen vermieden werden.

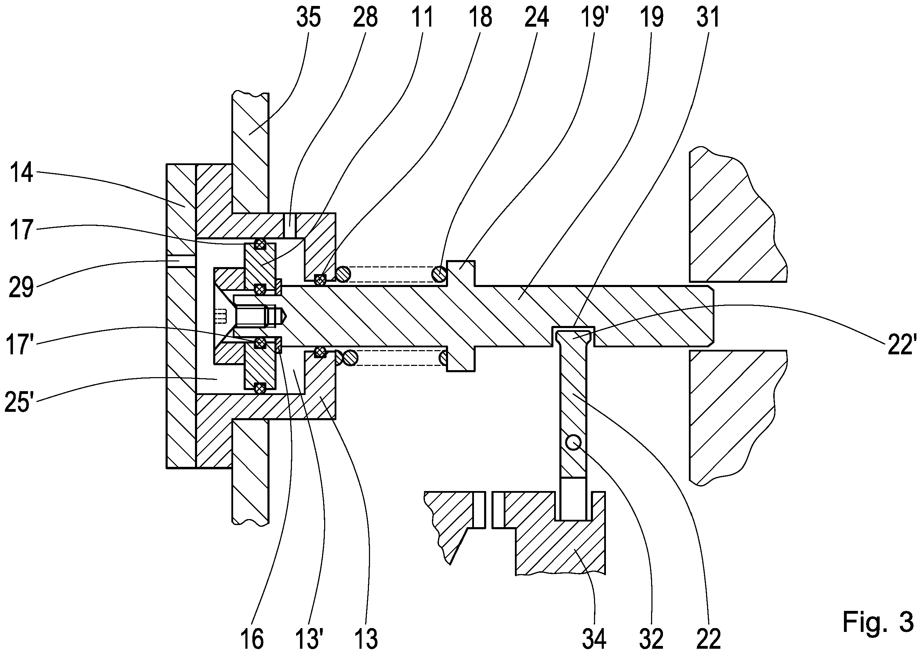

Fig. 3 zeigt schematisch eine weitere mögliche Ausbildungsform eines erfindungsgemäßen Schaltmoduls 20, bestehend aus einem Zylinder 13, einem Zylinderdeckel 14, einem Kolben 11 und einer Schaltstange 19. Über den Zylinder 13 erfolgt dabei eine Anbindung des Schaltmoduls 20 an ein Getriebegehäuse 35. Die Schaltstange 19 weist ein Anschlagring 19' auf, an welchem sich das Rückstellelement 24 abstützt. Das Rückstellelement 24 ist beispielsgemäß als elastische Schraubenfeder 24 ausgebildet, welche den Zylinder mit einer Rückstellkraft beaufschlagt. Die Schaltstange 19 weist weiterhin eine Aussparung 31 auf, welche einen Hebelkopf 22' einer Schaltgabel 22 derart aufnimmt, dass der Hebelkopf 22' einer Axialbewegung der Schaltstange 19 folgt. Die Schaltgabel 22 ist dabei wippenartig um ein Drehgelenk 32 gelagert. Mit dem dem Hebelkopf 22' abgewandten Ende steht die Schaltgabel 22 mit einer Schiebemuffe 34 in Kontakt, welche einer Axialbewegung der Schaltstange durch die Schaltgabel 22 entsprechend übersetzt folgt. Der Kolben 11 trennt das Innere des Zylinders 13 in einen Dämpfraum 25' und einen Ausrückraum 13'. Über eine Öffnung 28 im Zylinder 13 kann der Ausrückraum 13' mit Fluiddruck beaufschlagt werden und wieder entlüftet werden. Über Dichtelemente 17, 17' und 18 sind der Dämpfraum 25' vom Ausrückraum 13' bzw. von der Umgebung abgedichtet. Über eine Öffnung 29 im Zylinderdeckel 14 kann der Dämpfraum 25' entsprechend mit Fluiddruck beaufschlagt werden und wieder entlüftet werden. Beide Öffnungen 28 und 29 sind dabei beispielsgemäß mit in Fig. 3 nicht dargestellten Schnellentlüftungsventilen versehen, um möglichst schnelle und verzögerungsfreie Schaltvorgänge zu gewährleisten.

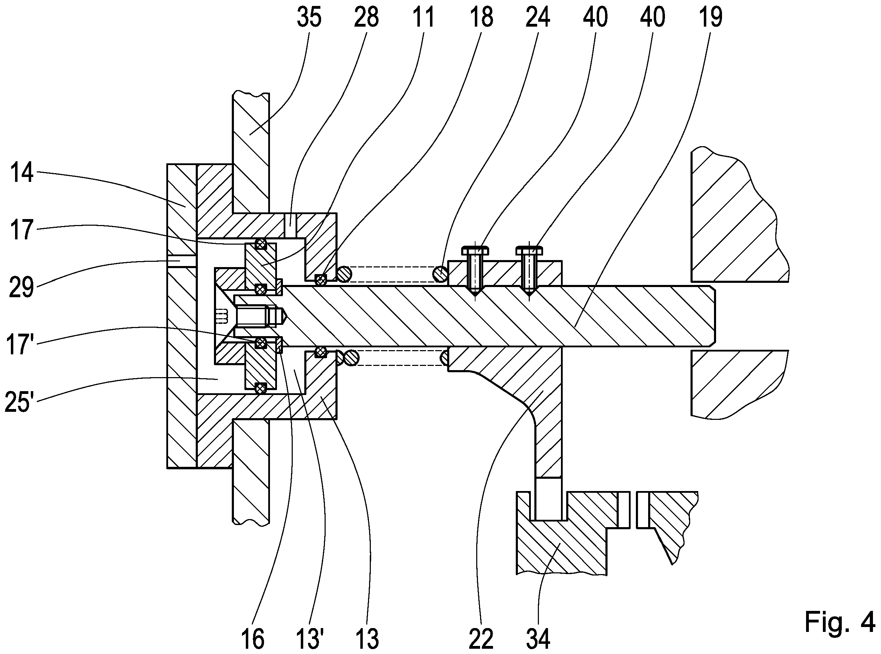

Fig. 4 zeigt schematisch eine weitere mögliche Ausbildungsform eines erfindungsgemäßen Schaltmoduls 20, wobei das Schaltmodul 20 der Fig. 4 bis auf die Ausbildung der Schaltstange 19 und der Schaltgabel 22 der in Fig. 3 gezeigten Ausbildungsform entspricht. Stattdessen ist die Schaltgabel 22 mittels zweier Verbindungselemente 40, beispielsgemäß zwei Schrauben 40, auf der Schaltstange 19 angeordnet und dient gleichzeitig als Anschlagring für das Rückstellelement 24. Entsprechend weist die Schaltstange 19 der Fig. 4 keinen Anschlagring 19' und keine Ausnehmung 31 auf.

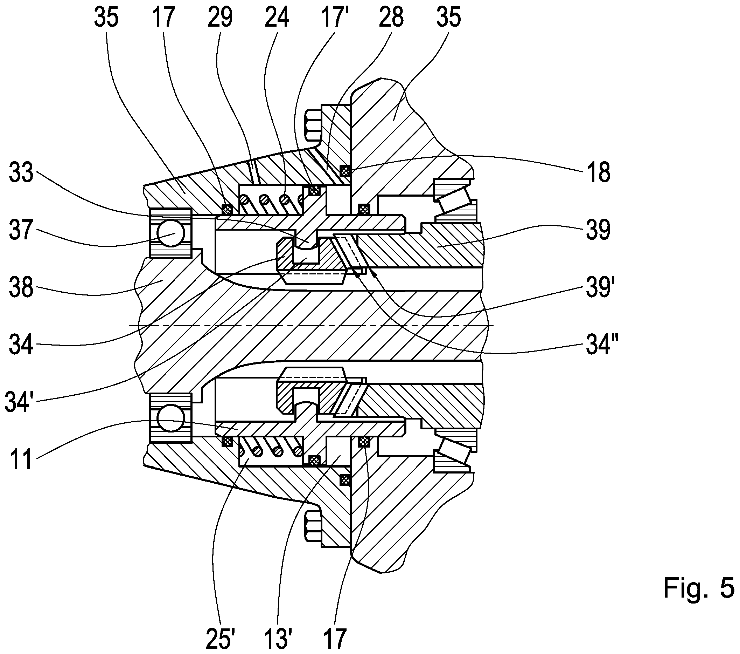

Fig. 5 zeigt schematisch eine weitere mögliche Ausbildungsform eines erfindungsgemäßen Schaltmoduls 20, wobei der Kolben 11 gemäß dem Beispiel der Fig. 5 als Ringkolben 11 ausgebildet ist. Mittels eines Mitnehmers 33 greift er direkt in eine Nut 34' der Schaltmuffe 34 ein. Der Ringkolben 11 trennt einen Ausrückraum 13' von einem Dämpfraum 25'. Ein Rückstellelement 24 ist im Dämpfraum 25' angeordnet und stützt sich mit einem Ende an einem Getriebegehäuse 35 ab und mit einem anderen Ende am Ringkolben 11. Über eine Öffnung 28 kann der Ausrückraum 13' mit Druckfluid beaufschlagt werden. Der Dämpfungsraum 25' kann über eine Öffnung 29 mit Druckfluid beaufschlagt werden. Über Dichtelemente 17, 17' und 18 sind der Dämpfungsraum 13' und der Ausrückraum 25' untereinander und nach außen abgedichtet. Wie weiterhin in Fig. 5 zu sehen ist, sind Außenwände der Kammern 13', 25' des Zylinder-Kolben-Aggregats 20 durch ein Getriebegehäuse 35 gebildet. Über ein Lager 37 ist eine Drehbarkeit einer Antriebswelle 38 mitsamt der Schiebemuffe 34 gewährleistet. In der Darstellung der Fig. 5 ist die Schiebemuffe 34 eingerückt, so dass sie mit ihrer Schaltverzahnung 34", den sog. Stirnklauen 34" mit einer entsprechenden Schaltverzahnung 39' bzw. Stirnklauen 39' eines Zahnrads 39 in Eingriff steht. Bei dem Zahnrad 39 kann es sich alternativ auch einen Differentialkorb oder einen Planetenträger handeln.

### Bezugszeichen

- 10: Schaltmodul
- 11: Kolben, erster Kolben, Ringkolben
- 12: Hülse
- 12': Anschlagring
- 13: Zylinder, erster Zylinder
- 13': Kammer des Zylinders, Ausrückraum
- 13": Kammer des Zylinders
- 14: Zylinderdeckel
- 14': Öffnung
- 15: Umfangszunahme der Hülse
- 16: Sicherungsring
- 17, 17': Dichtelement
- 18, 18': Dichtelement
- 19: Schaltstange
- 19': Anschlagring
- 20: Schaltmodul
- 22: Schaltgabel
- 22': Hebelkopf der Schaltgabel
- 24: Rückstellelement, Schraubenfeder
- 25: zweiter Zylinder
- 25': Dämpfraum
- 26: zweiter Kolben
- 27: Abstandsstift
- 28: Öffnung
- 29: Öffnung
- 30: Zylinder-Kolben-Aggregat
- 31: Aussparung
- 32: Drehgelenk
- 33: Mitnehmer
- 34: Schaltmuffe
- 34': Nut
- 34": Schaltverzahnung, Stirnklauen
- 35: Getriebegehäuse
- 36: Verbindungselement, Schraube
- 37: Lager
- 38: Antriebswelle
- 39: Zahnrad
- 39': Schaltverzahnung, Stirnklauen
- 40: Verbindungselement, Schraube

## Patentansprüche

1. Verwendung eines Schaltmoduls (20) zum Dämpfen von Beschleunigungen von Schaltungsteilen des Schaltmoduls (20), wobei das Schaltmodul (20) für eine Differentialsperre, für eine Gangschaltung oder für eine Achszuschaltung ausgebildet ist, wobei das Schaltmodul (20) ein elastisches Rückstellelement (24) und ein Zylinder-Kolben-Aggregat (30) umfasst, wobei das Rückstellelement (24) das Zylinder-Kolben-Aggregat (30) mit einer Rückstellkraft beaufschlagt und wobei das Zylinder-Kolben-Aggregat (30) als doppelwirkendes Zylinder-Kolben-Aggregat (30) ausgebildet ist, wobei Beschleunigungen von Schaltungsteilen (11, 12, 13, 14, 25, 26, 34) gedämpft werden, indem eine Kammer (25') des Zylinder-Kolben-Aggregats (30) mit einem Dämpfdruck befüllt wird, welcher entsprechend auf einen Kolben (26) des Zylinder-Kolben-Aggregats (30) wirkt und diesen entgegen den Beschleunigungen der Schaltungsteile (11, 12, 13, 14, 25, 26, 34) vorspannt, wobei die Beschleunigungen ausgehen von einer Abweisung durch eine Zahngeometrie von Schaltklauenpartnern bei Differenzdrehzahlen oder durch einen Zahn-auf-Zahn-Treffer zwischen Schaltklauenteilen.

2. Verwendung eines Schaltmoduls (20) nach Anspruch 1,
**dadurch gekennzeichnet, dass** das Schaltmodul (20) weiterhin eine Schaltstange (19) umfasst, wobei auf der Schaltstange (19) ein Anschlagring (19') angeordnet ist, an welchem sich das Rückstellelement (24) abstützt und wobei das Zylinder-Kolben-Aggregat (30) über einen Kolben (11) axialfest mit der Schaltstange (19) verbunden ist.

3. Verwendung eines Schaltmoduls (20) nach Anspruch 1,
**dadurch gekennzeichnet, dass** das Schaltmodul (20) weiterhin eine Schaltstange (19) umfasst, wobei auf der Schaltstange (19) eine Schaltgabel (22) angeordnet ist, an welcher sich das Rückstellelement (24) abstützt und wobei das Zylinder-Kolben-Aggregat (30) über einen Kolben (11) axialfest mit der Schaltstange (19) verbunden ist, wobei die Schaltgabel (22) axialfest mit der Schaltstange (19) verbunden ist.

4. Verwendung eines Schaltmoduls (20) nach Anspruch 1,
**dadurch gekennzeichnet, dass** ein Kolben (11) des Zylinder-Kolben-Aggregats (30) als Ringkolben (11) ausgebildet ist und dass das Rückstellelement (24) in einer Kammer (13', 13", 25') angeordnet ist.

5. Verwendung eines Schaltmoduls (20) nach Anspruch 4,
**dadurch gekennzeichnet, dass** der Ringkolben (11) an seinem radialen Innenumfang einen Mitnehmer (33) aufweist, welcher dazu ausgebildet ist, in eine Nut (34') einer Schaltmuffe (34) einzugreifen.

6. Verwendung eines Schaltmoduls (20) nach Anspruch 1,
**dadurch gekennzeichnet, dass** das Zylinder-Kolben-Aggregat (30) einen ersten Zylinder (13) mit einem darin angeordneten ersten Kolben (11) und einen zweiten Zylinder (25) mit einem darin angeordneten zweiten Kolben (26) umfasst und dass das Zylinder-Kolben-Aggregat (30) mittels eines Zylinderdeckels (14) axialfest mit einer Schaltstange (19) verbunden ist.

7. Verwendung eines Schaltmoduls (20) nach Anspruch 6,
**dadurch gekennzeichnet, dass** der erste Kolben (11) ausschließlich von einer ersten Seite mit einem ersten Druck beaufschlagbar ist und der zweite Kolben (26) ausschließlich von einer zweiten Seite mit einem zweiten Druck beaufschlagbar ist.

8. Verwendung eines Schaltmoduls (20) nach einem der Ansprüche 6 und 7,
**dadurch gekennzeichnet, dass** der erste Kolben (11) und der zweite Kolben (26) über mindestens einen Abstandsstift axial voneinander beabstandet sind, wobei jeder Abstandsstift (27) durch eine dafür vorgesehene Öffnung (14') eines Zylinderdeckels (14) verläuft.

9. Verwendung eines Schaltmoduls (20) nach einem der Ansprüche 6 bis 8,
**dadurch gekennzeichnet, dass** das Schaltmodul (20) weiterhin eine Hülse (12) umfasst und dass das Zylinder-Kolben-Aggregat (30) derart axialfest mit der Hülse (12) verbunden ist, dass die Hülse (12) auf der Schaltstange (19) axial verschieblich ist, wobei das Rückstellelement (24) sich an Hülse (12) abstützt.

10. Verwendung eines Schaltmoduls (20) nach Anspruch 9,
**dadurch gekennzeichnet, dass** auf der Hülse (12) ein Anschlagring (12') angeordnet ist, an welchem sich das Rückstellelement (24) abstützt.

11. Verwendung eines Schaltmoduls (20) nach einem der Ansprüche 1 bis 10,
**dadurch gekennzeichnet, dass** das Zylinder-Kolben-Aggregat (30) fluidbetätigbar ist.

12. Verwendung eines Schaltmoduls (20) nach einem der Ansprüche 1 bis 11,
**dadurch gekennzeichnet, dass** das Rückstellelement (24) als Schraubenfeder (24) oder als Tellerfeder ausgebildet ist.

13. Verwendung eines Schaltmoduls (20) nach einem der Ansprüche 1 bis 12,
**dadurch gekennzeichnet, dass** die Schaltstange (19) eine Aussparung (31) aufweist, in welche ein Hebelkopf (22') der Schaltgabel (22) eingreift, wobei die Schaltgabel wippenartig um ein Drehgelenk (32) gelagert ist.

## Claims

1. Use of a shifting module (20) for damping accelerations of shift parts of the shifting module (20), the shifting module (20) being configured for a differential lock, for a gear shifter or for an axle switching-in means, the shifting module (20) comprising an elastic restoring element (24) and a cylinder/piston assembly (30), the restoring element (24) loading the piston/cylinder assembly (30) with a restoring force, and the cylinder/piston assembly (30) being configured as a double-acting cylinder/piston assembly (30), accelerations of shift parts (11, 12, 13, 14, 25, 26, 34) being damped by a chamber (25') of the cylinder/piston assembly (30) being filled with a damping pressure which acts correspondingly on a piston (26) of the cylinder/piston assembly (30) and prestresses the latter counter to the accelerations of the shift parts (11, 12, 13, 14, 25, 26, 34), the accelerations emanating from a deflection by way of a tooth geometry of shifting claw partners in the case of differential rotational speeds or by way of tooth-on-tooth contact between shifting claw parts.

2. Use of a shifting module (20) according to Claim 1, **characterized in that**, furthermore, the shifting module (20) comprises a shifting rod (19), a stop ring (19') being arranged on the shifting rod (19), on which stop ring (19') the restoring element (24) is supported, and the piston/cylinder assembly (30) being connected in an axially fixed manner via a piston (11) to the shifting rod (19).

3. Use of a shifting module (20) according to Claim 1, **characterized in that**, furthermore, the shifting module (20) comprises a shifting rod (19), a shifting fork (22) being arranged on the shifting rod (19), on which shifting fork (22) the restoring element (24) is supported, and the piston/cylinder assembly (30) being connected in an axially fixed manner via a piston (11) to the shifting rod (19), the shifting fork (22) being connected in an axially fixed manner to the shifting rod (19) .

4. Use of a shifting module (20) according to Claim 1, **characterized in that** a piston (11) of the cylinder/piston assembly (30) is configured as an annular piston (11), and **in that** the restoring element (24) is arranged in a chamber (13', 13", 25').

5. Use of a shifting module (20) according to Claim 4, **characterized in that** the annular piston (11) has a driver (33) on its radial inner circumference, which driver (33) is configured to engage into a groove (34') of a shifting sleeve (34).

6. Use of a shifting module (20) according to Claim 1, **characterized in that** the cylinder/piston assembly (30) comprises a first cylinder (13) with a first piston (11) which is arranged therein and a second cylinder (25) with a second piston (26) which is arranged therein, and **in that** the cylinder/piston assembly (30) is connected in an axially fixed manner by means of a cylinder cover (14) to a shifting rod (19) .

7. Use of a shifting module (20) according to Claim 6, **characterized in that** the first piston (11) can be loaded with a first pressure exclusively from a first side, and the second piston (26) can be loaded with a second pressure exclusively from a second side.

8. Use of a shifting module (20) according to either of Claims 6 and 7, **characterized in that** the first piston (11) and the second piston (26) are spaced apart axially from one another via at least one spacer pin, each spacer pin (27) running through an opening (14') of a cylinder cover (14), which opening (14') is provided for this purpose.

9. Use of a shifting module (20) according to one of Claims 6 to 8, **characterized in that**, furthermore, the shifting module (20) comprises a sleeve (12), and **in that** the cylinder/piston assembly (30) is connected in an axially fixed manner to the sleeve (12) in such a way that the sleeve (12) is axially displaceable on the shifting rod (19), the restoring element (24) being supported on the sleeve (12).

10. Use of a shifting module (20) according to Claim 9, **characterized in that** a stop ring (12') is arranged on the sleeve (12), on which stop ring (12') the restoring element (24) is supported.

11. Use of a shifting module (20) according to one of Claims 1 to 10, **characterized in that** the cylinder/piston assembly (30) can be actuated by way of fluid.

12. Use of a shifting module (20) according to one of Claims 1 to 11, **characterized in that** the restoring element (24) is configured as a helical spring (24) or as a cup spring.

13. Use of a shifting module (20) according to one of Claims 1 to 12, **characterized in that** the shifting rod (19) has a cut-out (31), into which a lever head (22') of the shifting fork (22) engages, the shifting fork being mounted in a rocker-like manner about a swivel joint (32).

## Revendications

1. Utilisation d'un module de commutation (20) pour l'amortissement d'accélérations de parties de commutation du module de commutation (20), le module de commutation (20) étant configuré pour un blocage de différentiel, pour un changement de vitesse ou pour un accouplement d'essieu, le module de commutation (20) comprenant un élément de rappel élastique (24) et un groupe cylindre-piston (30), l'élément de rappel (24) chargeant le groupe cylindre-piston (30) avec une force de rappel et le groupe cylindre-piston (30) étant configuré sous la forme d'un groupe cylindre-piston (30) à double effet,
des accélérations de parties de commutation (11, 12, 13, 14, 25, 26, 34) étant amorties par remplissage d'une chambre (25') du groupe cylindre-piston (30) avec une pression d'amortissement, qui agit de manière correspondante sur un piston (26) du groupe cylindre-piston (30) et prétend celui-ci contre les accélérations des parties de commutation (11, 12, 13, 14, 25, 26, 34), les accélérations provenant d'un rejet par une géométrie de dent de partenaires de crabot à des vitesses de rotation de différentiel ou par un impact dent sur dent entre des parties de crabot.

2. Utilisation d'un module de commutation (20) selon la revendication 1, **caractérisée en ce que** le module de commutation (20) comprend en outre une tige de commutation (19), un anneau de butée (19') étant agencé sur la tige de commutation (19), sur lequel l'élément de rappel (24) s'appuie, et le groupe cylindre-piston (30) étant relié de manière immobile axialement avec la tige de commutation (19) par l'intermédiaire d'un piston (11).

3. Utilisation d'un module de commutation (20) selon la revendication 1, **caractérisée en ce que** le module de commutation (20) comprend en outre une tige de commutation (19), une fourche de commutation (22) étant agencée sur la tige de commutation (19), sur laquelle l'élément de rappel (24) s'appuie, et le groupe cylindre-piston (30) étant relié de manière immobile axialement avec la tige de commutation (19) par l'intermédiaire d'un piston (11), la fourche de commutation (22) étant reliée de manière immobile axialement avec la tige de commutation (19).

4. Utilisation d'un module de commutation (20) selon la revendication 1, **caractérisée en ce qu'**un piston (11) du groupe cylindre-piston (30) est configuré sous la forme d'un piston annulaire (11) et **en ce que** l'élément de rappel (24) est agencé dans une chambre (13', 13", 25').

5. Utilisation d'un module de commutation (20) selon la revendication 4, **caractérisée en ce que** le piston annulaire (11) comprend un entraîneur (33) sur sa périphérie interne radiale, qui est configuré pour entrer en prise dans une rainure (34') d'un manchon de commutation (34).

6. Utilisation d'un module de commutation (20) selon la revendication 1, **caractérisée en ce que** le groupe cylindre-piston (30) comprend un premier cylindre (13) dans lequel est agencé un premier piston (11) et un deuxième cylindre (25) dans lequel est agencé un deuxième piston (26), et **en ce que** le groupe cylindre-piston (30) est relié de manière immobile axialement avec une tige de commutation (19) par l'intermédiaire d'un couvercle de cylindre (14).

7. Utilisation d'un module de commutation (20) selon la revendication 6, **caractérisée en ce que** le premier piston (11) peut être chargé avec une première pression exclusivement depuis un premier côté et le deuxième piston (26) peut être chargé avec une deuxième pression exclusivement depuis un deuxième côté.

8. Utilisation d'un module de commutation (20) selon l'une quelconque des revendications 6 et 7, **caractérisée en ce que** le premier piston (11) et le deuxième piston (26) sont espacés axialement l'un de l'autre par l'intermédiaire d'au moins une broche d'espacement, chaque broche d'espacement (27) passant au travers d'une ouverture (14') prévue pour celle-ci d'un couvercle de cylindre (14).

9. Utilisation d'un module de commutation (20) selon l'une quelconque des revendications 6 à 8, **caractérisée en ce que** le module de commutation (20) comprend en outre une gaine (12) et **en ce que** le groupe cylindre-piston (30) est relié de manière immobile axialement avec la gaine (12) de telle sorte que la gaine (12) puisse être déplacée axialement sur la tige de commutation (19), l'élément de rappel (24) s'appuyant sur la gaine (12).

10. Utilisation d'un module de commutation (20) selon la revendication 9, **caractérisée en ce qu'**un anneau de butée (12') est agencé sur la gaine (12), sur lequel l'élément de rappel (24) s'appuie.

11. Utilisation d'un module de commutation (20) selon l'une quelconque des revendications 1 à 10, **caractérisée en ce que** le groupe cylindre-piston (30) est actionnable par un fluide.

12. Utilisation d'un module de commutation (20) selon l'une quelconque des revendications 1 à 11, **caractérisée en ce que** l'élément de rappel (24) est configuré sous la forme d'un ressort hélicoïdal (24) ou sous la forme d'un ressort à disque.

13. Utilisation d'un module de commutation (20) selon l'une quelconque des revendications 1 à 12, **caractérisée en ce que** la tige de commutation (19) comprend un évidement (31), dans lequel une tête de levier (22') de la fourche de commutation (22) entre en prise, la fourche de commutation étant montée en basculement autour d'une articulation rotative (32).
